(19) Europäisches Patentamt
European Patent Office
Office européen des brevets

(11) **EP 3 330 775 B1**

(12) **EUROPÄISCHE PATENTSCHRIFT**

(45) Veröffentlichungstag und Bekanntmachung des Hinweises auf die Patenterteilung:
**07.02.2024   Patentblatt 2024/06**

(21) Anmeldenummer: **16201826.1**

(22) Anmeldetag: **01.12.2016**

(51) Internationale Patentklassifikation (IPC):
**G02B 27/40** (2006.01)      **G02B 7/28** (2021.01)

(52) Gemeinsame Patentklassifikation (CPC):
**G02B 27/40; G02B 7/28**

(54) **AUTOFOKUSSYSTEM ZUR DETEKTION VON GRENZFLÄCHEN**

AUTOFOCUS SYSTEM FOR DETECTING INTERFACES

SYSTÈME À MISE AU POINT AUTOMATIQUE SERVANT À LA DÉTECTION DE LIMITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.06.2018   Patentblatt 2018/23**

(73) Patentinhaber: **MULTIPHOTON OPTICS GMBH**
**97076 Würzburg (DE)**

(72) Erfinder:
• **HOUBERTZ, Ruth**
**97076 Würzburg (DE)**
• **KRUPP, Alexander**
**97076 Würzburg (DE)**
• **STENDER, Benedikt**
**97076 Würzburg (DE)**
• **KÜHN, Daniel**
**97076 Würzburg (DE)**

(74) Vertreter: **Strehl Schübel-Hopf & Partner**
**Maximilianstrasse 54**
**80538 München (DE)**

(56) Entgegenhaltungen:
**WO-A1-97/22900**        **US-A- 4 814 829**
**US-A- 5 486 701**        **US-A- 5 747 813**
**US-A- 6 084 716**        **US-A1- 2004 196 456**
**US-A1- 2005 068 614**   **US-A1- 2010 294 749**
**US-A1- 2011 176 793**

• **Osioptoelectronic: "Photodiode Characteristics and Applications", Application note, 31. Dezember 2015 (2015-12-31), XP055371042, Gefunden im Internet: URL:http://www.osioptoelectronics.com/application-notes/an-photodiode-parameters-characteristics.pdf [gefunden am 2017-05-10]**

**Beschreibung**

Die Erfindung betrifft ein Autofokussystem zur Detektion von Grenzflächen in einer Probe und eine Vorrichtung zur Lichtstrukturierung durch Ein- oder Mehr-Photonen-Prozesse mit einem solchen Autofokussystem.

Aus dem Bereich der Mikroskopie sind verschiedenartige Autofokussysteme bekannt, die sich zur Detektion von Grenzflächen, in welchen Materialien mit stark unterschiedlichen Brechungsindizes aufeinandertreffen, eignen. Die bekannten Systeme basieren auf Triangulationsverfahren, abbildenden Verfahren mit Kontrastauswertung und der Positionsbestimmung mittels schräggestellter konfokaler Spaltblende.

Bei Triangulationsverfahren wird ein kollimierter Laserstrahl in die Pupillenebene eines Objektivs eingespiegelt, und aus dem Verlauf dieses Laserstrahls relativ zum Abbildungsstrahlengang kann auf die z-Position des von der Probe reflektierten Laserlichts geschlossen werden. Bei der Abbildung des Laserlichts in unterschiedlich tief gelegene Ebenen der Probe treten jedoch Bildfehler auf, sodass die Autofokusgüte über einen gegebenen Tiefenschärfebereich stark variiert. Aufgrund der notwendigen Winkelabweichung zwischen Laserlicht und Abbildungstrahlengang kommt es zudem zu Fehlern dadurch, dass die Meßergebnisse zumindest teilweise am Rand der Probe bzw. des verwendeten Detektors ermittelt werden. Üblicherweise wird ein Triangulationsverfahren derzeit iterativ ausgeführt und die erreichbare Präzision ist begrenzt.

Bei abbildenden Verfahren mit Kontrastauswertung wird die Probe mit einer bestimmten Intensitätsverteilung beleuchtet, meist indem in eine Feldebene eines Beleuchtungstrahlengangs ein Gitter gestellt wird. Man nimmt eine Serie von Bildern mit unterschiedlichen Abständen zwischen Abbildungsoptik und Probe auf und ermittelt in dieser Serie dasjenige Bild mit dem höchsten Kontrast. Diesem ist dann der optimale Fokusabstand zugeordnet. Hier müssen zur Aufnahme der Bildserie verschiedene z-Positionen mit hoher Genauigkeit angefahren werden, was zeitraubend ist. Beispiele für eine Autofokuseinrichtung mittels Kontrastanalyse eines auf eine Probe projizierten Musters finden sich in der US 5,604,344 oder der US 6,545,765. Im Zusammenhang mit Verfahren zur Laserstrahlbearbeitung eines Werkstücks durch Zweiphotonen-Prozesse ist ein Verfahren mit Kontrastauswertung aus der WO 2009/065590 A1 bekannt. Das dort offenbarte Autofokussystem umfasst eine von einem Bearbeitungslaserstrahl unabhängige Autofokus-Beleuchtung mit einem im Vergleich zur Bearbeitungslaserstrahlung langwelligeren Spektrum.

Bei der Positionsbestimmung mit schräggestellter konfokaler Spaltblende wird in die Feldblendenebene des Beleuchtungsstrahlengangs eine Spaltblende gestellt und auf die Probe abgebildet. Das von der Probe reflektierte Licht wird auf eine relativ zur Spaltblende geneigt angeordnete CCD-Zeile gerichtet und es wird diejenige Position auf der CCD-Zeile bestimmt, in welcher das reflektierte Licht ein Maximum hat. Verunreinigungen auf der Probe oder auf der Probenoberfläche können zu Intensitätsschwankungen und damit zu Messfehlern führen. Auch ist bei der Abbildung des Spalts auf die CCD-Zeile ein großer Justieraufwand erforderlich, da der Spalt sehr schmal sein muss, um eine hohe Genauigkeit zu erreichen. Eine Verbesserung der Positionsbestimmung mittels schräggestellter konfokaler Spaltblende ist in der DE 10319182 A1 geschildert.

Nachteilig an den oben beschriebenen Verfahren ist, dass sie nur zur Detektion von Grenzflächen zwischen Glas und Wasser, Glas und Luft bzw. Wasser und Luft oder beliebigen anderen Grenzflächen geeignet sind, die Reflexionsgrade von mindestens 0,4% besitzen. Trotz gewisser Verbesserungen durch Maßnahmen zur Verringerung des Einflusses von Streulicht, wie sie beispielsweise in der US 7,345,814 B2 beschrieben sind, oder im Hinblick auf Interferenzen durch Sandwich-Strukturen der Form Glas/Probe/Glas, wie sie in der WO 2010/067256 A1 diskutiert sind, können die bisher genannten Verfahren nur Grenzflächen mit Brechungsindexunterschieden von $\Delta n \geq 0,1$ detektieren.

Gerade für die Strukturierung von photosensitiven Materialien (Photolacken) auf Substraten, insbesondere Substraten mit ähnlicher Brechzahl, ist jedoch eine Detektion von Glas/Polymer-Grenzflächen oder Grenzflächen zwischen bearbeiteten und nicht bearbeiteten Bereichen des Polymers erforderlich, an denen Brechzahlunterschiede im Bereich von $0,1 \geq \Delta n \geq 0,001$ mit entsprechend niedrig ausgeprägter Reflexion von bis zu $10^{-4}$ (0,01 %) auftreten . Gleichzeitig sollte das System aber zu Referenzierungszwecken auch in der Lage sein, Grenzflächen mit höherer Brechzahldifferenz, wie beispielsweise eine Grenzfläche Glas/Luft, zu detektieren.

Die bekannten Systeme sind jeweils zur Detektion von einer bestimmten Brechzahldifferenz bzw. Reflektivität in einem sehr engen Intervall ausgelegt und ermöglichen keine Änderung bzw. Anpassung der Empfindlichkeit.

Aus der US 4 814 829 A ist ein Projektionssystem mit einem CCD-Sensor bekannt. Aus der US 2011/176793 A1 ist ein Autofokussystem mit einer Anordnung von mehreren Liniensensoren bekannt.

Aus der WO 97/22900 A1 und der Aus der US 5 486 701 A sind Autofokussysteme mit einer in einem Autofokus-Strahlengang angeordneten Linse bekannt, in welchem Strahlen aus zwei verschiedenen Strahlenquellen zum Vermessen einer Schichttticke in Halbleiterprozessen verwendet werden.

Aufgabe der Erfindung ist es daher insbesondere, eine eine Vorrichtung zur Lichtstrukturierung durch Ein- oder Mehr-Photonen-Prozesse mit einem gattungsgemäßen Autofokussystem bereitzustellen, welches Grenzflächen in einem breiten Bereich von Werten für die Reflektivität, insbesondere aber für sehr niedrige Werte ($10^{-4}$), detektieren kann. Ferner liegt der Erfindung die Aufgabe zugrunde, eine Vorrichtung zur Lichtstrukturierung, insbesondere mittels des Ein- oder Mehr-Photonen-Prozesses mit einem Autofokussystem auszustatten, welches die Bearbeitung von Materialien auf nahezu beliebigen sowie auf beliebig geformten Substraten und/oder Körpern und/oder in Volumina ermöglicht.

Die Erfinudng schlägt vor, die Aufgabe mit einer Vorrichtung mit den Merkmalen des Anspruchs 1 und einer Verwemdung einer solchen Vorrichtung mit dem Merkmalen des Anspruchs 17 zu lösen.Die Erfindung geht aus von einer Vorrichtung zur Lichtstrukturierung durch Ein- oder Mehr-Photonen-Prozesse mit einem Autofokussystem zur Detektion von reflektierenden Grenzflächen, insbesondere Grenzflächen mit geringer Reflektivität, in einer Probe. Das Autofokussystem umfasst eine Strahlungsquelle zum Erzeugen einer Autofokusbeleuchtung und eine Fokussieroptik zum Fokussieren der Autofokusbeleuchtung in einen Grenzflächenbereich der Probe, in welchem die Grenzfläche detektiert werden soll. Zwischen der Strahlungsquelle und der Fokussieroptik ist zumindest ein Strahlteiler zum Einstrahlen bzw. Einkoppeln der Autofokusbeleuchtung in die Fokussieroptik und zum Auskoppeln von reflektierten Anteilen der Autofokusbeleuchtung in einem Autofokusstrahlengang vorgesehen. Ferner umfasst das Autofokussystem zumindest einen Detektor zum Detektieren einer Intensität der reflektierten Anteile der Autofokusbeleuchtung.

Erfindungsgemäß wird vorgeschlagen, dass der zumindest eine Detektor eine Noise Equivalent Power (NEP) hat, der in einem Intervall zwischen 1 fW/Hz$^{1/2}$ und 300 pW/Hz$^{1/2}$ liegt sowie das Autofokussystem mit zumindest einem Mittel auszustatten, welches dazu ausgelegt ist, die Intensität der vom Detektor detektierten Anteile der Autofokusbeleuchtung mit einem Sensitivitätsbereich des Detektors in Übereinstimmung zu bringen. Je nach gestellter Messaufgabe werden Detektoren anderer Empfindlichkeit eingesetzt, was auf die stark unterschiedlichen Reflektivitäten der verschiedenen Materialien und Grenzflächen zurück zu führen ist. Um beispielsweise Grenzschichten von Metall-Luft bzw. Halbleiter-Luft zu detektieren, werden Detektoren verwendet, deren NEP vorzugsweise zwischen 1 pW/Hz$^{1/2}$ und 300 pW/Hz$^{1/2}$liegt. Da die Reflektivität von Metallen und Halbleitern sowie die Unterschiede in den Brechzahlen zwischen Metallen bzw. Halbleitern und Luft sehr hoch sind, muss hier kein so empfindlicher Detektor eingesetzt werden. Wird es notwendig, neben Metall-Luft und Halbleiter-Luft auch Polymer-Luft oder Glas-Luft-Grenzflächen zu detektieren, werden bevorzugt Detektoren eingesetzt, die eine niedrigere NEP abdecken, damit auch die Grenzflächen mit der niedrigsten Reflektivität detektiert werden können. Die NEP hierfür kann bevorzugt zwischen 500 fW/Hz$^{1/2}$ und 300 pW/Hz$^{1/2}$ liegen. Um alle möglichen Grenzschichten und Kombinationen von Materialien, wie sie in einem Assembly auftreten können, von beispielsweise Metall-Luft, Halbleiter-Luft, Glas-Luft und Polymer-Luft, Metall/Polymer-Luft, Halbleiter/Polymer-Luft, Halbleiter/Polymer/Metall/Polymer-Luft, Glas/Polymer-Luft, Halbleiter/Polymer/Metall/Polymer/Glas und Glas/Polymer-Glas/Polymer zu detektieren, werden Detektoren eingesetzt, deren NEP im Bereich zwischen 1 fW/Hz$^{1/2}$ und 100 fW/Hz$^{1/2}$, was stark von der Reflektivität bzw. der Brechzahl des verwendeten Polymers und der Schichtdicke der aufgebrachten Poylmerschicht abhängt.

Die oben genannten Grenzflächen sind hierbei nur als Beispiele zu verstehen; Materialien mit ähnlichen Brechzahldifferenzen können natürlich auch detektiert werden. Die rauschäquivalente Eingangsleistung (noise equivalent power, NEP) liegt im bevorzugten Ausführungsbeispiel bei ca. 1,4 fW/Hz$^{1/2}$, damit Grenzflächen mit beinahe beliebig kleiner Brechzahldifferenz detektiert werden können. Der Sensitivitätsbereich kann dabei je nach verwendetem Sensor bzw. Material aus dem der Sensor besteht, in unterschiedlichen Wellenlängenbereichen liegen. Die NEP ist definiert als diejenige Signalleistung des gesamten Spektrums der Autofokus-Beleuchtung, die bei einem Sampling-Intervall entsprechend 1 Hz ein Signal-Rauschverhältnis von 1 ergibt. Wie im Folgenden beschrieben, kann die Intensität mit dem Sensitivitätsbereich in Übereinstimmung gebracht werden, indem die Intensität der einfallenden Strahlung geändert wird oder indem der Sensitivitätsbereich geändert wird, beispielsweise durch Auswahl und Verwendung eines geeigneten Detektors.

Durch die Kombination des hochempfindlichen Sensors mit dem Mittel zum Anpassen der Sensitivität wird ein System bereitgestellt, dass nicht nur Grenzflächen mit sehr geringer Reflektivität detektieren kann, sondern darüber hinaus auch ein breites Spektrum von Grenzflächen mit höheren Reflektivitätswerten, wie sie in den technischen Anwendungen des erfindungsgemäßen Autofokussystems auftreten, detektieren kann.

Hier und im Folgenden werden eine in den Detektor einfallende Intensität und dessen Sensitivitätsbereich als übereinstimmend bezeichnet, wenn die Intensität innerhalb des Sensitivitätsbereichs liegt. Der Sensitivitätsbereich des Detektors ist ein gegebenenfalls vom Spektrum der Autofokusbeleuchtung abhängiger Bereich von Intensitäten, die der Detektor zuverlässig messen kann. Nach unten ist der Sensitivitätsbereich insbesondere durch das Rauschen bzw. einen Dunkelstrom begrenzt und nach oben durch eine Sättigung des Detektors. Damit kann die Untergrenze des Sensitivitätsbereichs beispielsweise auch durch Werte festgelegt werden, in welchen das Sensorsignal 150% des Dunkel- bzw. Rauschsignals ausmacht und die obere Grenze des Sensitivitätsbereichs auf einen Intensitätswert, bei dem 90% des Sättigungssignals erreicht werden.Wie weiter unten erklärt kann die oben definierte NEP über die Untergrenze des Sensitivitätsbereiches und Bandbreite des Detektors bestimmt werden.

Wie weiter unten beschrieben, kann das Mittel vielfältige Formen annehmen. Es ist insbesondere eine Vorrichtung denkbar, die eine Anpassung des Autofokussystems an die Reflektivität der zu detektierenden Grenzfläche ermöglicht, insbesondere eine Erhöhung der Empfindlichkeit für den Fall, dass Grenzflächen mit sehr niedrigen Reflektivitäten im Bereich von $10^{-4}$ detektiert werden sollen.

Durch die erfindungsgemäße Anpassbarkeit des Autofokussystems wird eine automatisierbare und/oder automatische Variante eines Autofokussystems für Glas/Probe/Glas oder Glas/Probe-Architekturen, beispielsweise in Form von Folgen verschiedener Materialien, wie Schichtfolgen, zur Verfügung gestellt, die einerseits selbst kleinste Brechzahlunterschiede bzw. geringste Reflektivitäten auflösen kann und andererseits auch Grenzflächen mit höherer Reflektivität zur Referenzierung nutzen kann. Dadurch wird die Prozessierung von Grenzflächen zwischen auf Substraten applizierten Materialien und/oder Grenzflächen zwischen verschiedenen Materialien auf dem gleichen Substrat ermöglicht. Insbesondere wird auch die Detektion von Materialkontrasten innerhalb des Volumens eines Materials ermöglicht, selbst wenn sie sehr geringe Brechzahlunterschiede zeigen.

Dadurch können in Verfahren zum Photostrukturieren eines mit einem über eine Ein- oder Mehr-Photon-Polymerisation polymerisierbaren Materials selektiv belichtete Strukturen, wie sie in WO 2014/108546 A2 beschrieben sind, detektiert werden, sodass auch in Verfahren, die eine Vor-, Zwischen- oder Nachverfestigung des gesamten Bauteils mit einer selektiven Belichtung in einem Laserschreibvorgang kombinieren, eine hohe Präzision erreichbar ist, insbesondere bei der Herstellung von selektiv belichteten Bereichen mit unterschiedlichen Brechungsindizes. Das erfindungsgemäße Autofokussystem kann allgemein in Verfahren zum Lichtstrukturieren von Materialien eingesetzt werden oder auch in anderen Anwendungsbereichen, in denen die Detektion von Grenzflächen mit sehr geringer Reflektivität oder stark unterschiedlicher Reflektivität erforderlich ist. Als Lichtstrukturierung werden hier und im Folgenden Verfahren mit Laserbearbeitungs- bzw. Laserschreibvorgängen sowie auch Verfahren mit klassischer UV-Belichtung bezeichnet.

In einer Ausgestaltung der Erfindung umfasst das Mittel zumindest einen in den Lichtweg der Autofokusbeleuchtung einbringbaren Filter. Dabei kann der Filter zwischen der Strahlungsquelle und dem Strahlteiler oder zwischen dem Strahlteiler und dem Detektor angeordnet werden und manuell oder automatisierbar eingesetzt werden. Der Filter soll insbesondere die in den Detektor einfallende Intensität reduzieren, und zwar indirekt durch die Verringerung der eingestrahlten Leistung oder direkt über die Abschwächung der Intensität der von der Probe reflektierten Anteile. Der Filter kann Teil einer geeigneten Filterkombination sein, die reflektive, absorptive oder dielektrische Neutraldichte-Filter umfassen kann. Beispielsweise kann das Mittel ein mechanisches Filterrad sein, auf dem Filter in einer ringförmigen Anordnung angebracht sind oder eine Filterschiene, auf der die Filter nebeneinander oder übereinander linear oder rund angeordnet sind. Der Austausch kann manuell oder elektronisch gesteuert erfolgen, beispielsweise durch einen Treiber und eine Steuerungssoftware, welche den Detektor ausliest und abhängig von der detektierten Leistung den passenden Filter oder die passende Filterkombination in den Strahlengang einstellt, sodass der Detektor nicht übersättigt. Ist eine Detektion der eingestrahlten Leistung aufgrund einer Übersättigung des Detektors nicht möglich, kann iterativ ein Filter mit immer geringerer Transmission eingesetzt werden, bis letztlich die transmittierte Leistung und Intensität in den Sensitivitätsbereich des Detektors fällt.

In einer weiteren Ausgestaltung der Erfindung ist das Mittel zum Einstellen einer Strahlungsleistung in der Strahlungsquelle selbst vorzufinden. Grundsätzlich sind Varianten der Erfindung denkbar, in welchen ein Bearbeitungslaser einer Laserbearbeitungsanlage gleichzeitig als Strahlungsquelle für das Autofokussystem verwendet wird. Soweit die Laseranlage Ein- oder Mehrphoton-Prozesse verwendet, können hier Maßnahmen ergriffen werden, die eine Wechselwirkung des Lichts mit der Probe reduzieren. Solche Reaktionen können beispielsweise das Auslösen eines Vernetzungs- oder Kettenspaltungsprozesses, ein Ablationsprozess, eine Umkristallisation, ein Phasenübergang oder ein Redox-Prozess sein. Die Lichtquelle kann in ihrer Verwendung als Strahlungsquelle für das Autofokussystem entweder in ihrer Intensität so reduziert werden, dass die Raten unerwünschter Reaktionen, insbesondere Vernetzungsreaktionen, gering bleiben oder aber die Frequenz wird verändert, beispielsweise durch Verstimmen des Lasers oder durch Zwischenschalten von Materialien mit nichtlinearen optischen Eigenschaften und anschließendes Herausfiltern der Laserlinie erster Ordnung.

Alternativ dazu kann eine von dem Bearbeitungslaser unabhängige Lichtquelle, beispielsweise eine LED, eine Diode oder ein weiterer Laser verwendet werden, deren Licht nicht oder kaum mit der Probe wechselwirkt und die als Strahlungsquelle für das Autofokussystem eingesetzt wird. Dadurch kann vermieden werden, dass das Material während des Autofokusvorgangs der Probe zusätzlich belichtet wird.

Das Mittel zur Einstellung der Strahlungsleistung kann dann als einfaches Potentiometer, über eine Pulsweitenmodulation oder dergleichen verwirklicht werden.

Ferner wird vorgeschlagen, dass das Autofokussystem eine Treibereinheit zum automatisierten Betreiben des Mittels umfasst. Insbesondere umfasst das Autofokussystem in einer bevorzugten Ausgestaltung eine Steuerung, die dazu ausgelegt ist, das Mittel in einem zumindest teilautomatisierten Prozess so einzustellen, dass die Intensität der vom Detektor detektierten Anteile der Autofokusbeleuchtung in den Sensitivitätsbereich des Detektors fällt. Es sind auch Ausgestaltungen der Erfindung denkbar, in denen die Intensität der vom Detektor detektierten Anteile bzw. das Ausgangssignal des Detektors konstant ist.

Zur Detektion der Grenzfläche kann einerseits die eingestrahlte Leistung konstant gehalten werden und die im Detektor ankommende Strahlungsleistung abhängig von der z-Position der Fokalebene bestimmt werden und andererseits kann die eingestrahlte Leistung der Strahlungsquelle im Fokus so variiert werden, dass die im Detektor ankommende Strahlungsleistung einen konstanten, vorgegebenen Wert hat. Während in der Regel Grenzflächen in der erstgenannten Weise detektiert werden, wobei die Fokusposition durch Verstellen der Fokalebene in Strahlrichtung durch die Grenzflächen hindurch verschoben wird und die Position eines an der Grenzfläche auftretenden Intensitäts-Peaks detektiert wird, ergibt sich beim Regeln der detektierten Intensität auf einen konstanten Wert ein Minimum der eingestrahlten Leistung der Strahlungsquelle im Fokus, wenn diese in Abhängigkeit von der z-Position der Fokalebene dargestellt wird. Es sind auch Kombinationen von beiden Messverfahren denkbar, beispielsweise indem die eingestrahlte Leistung nur dann angepasst wird, wenn die Leistung im Detektor einen kritischen oberen Grenzwert (Sättigung) oder unteren Grenzwert bzw. ein kritisches Signal-Rauschverhältnis erreicht.

In einer bevorzugten Ausgestaltung der Erfindung umfasst das Autofokussystem daher einen Regelkreis, in welchem die Steuerung der Intensität der vom Detektor detektierten Anteile der Autofokusbeleuchtung als Regelgröße genutzt wird.

In einer weiteren Ausgestaltung der Erfindung kann der Benutzer über eine entsprechende Schnittstelle die für die zu untersuchende Probe geeignete Leistung einstellen. Dies kann durch die softwareseitige Eingabe des Materials bzw. von Parametern des Materials geschehen, wobei die Steuerung dann abhängig von einer Materialdatenbank oder geeigneten Kennlinien automatisch die richtige Leistung lädt.

Nach der Erfindung umfasst das Autofokussystem mehrere Detektoren mit unterschiedlichen Sensitivitätsbereichen. Das Mittel ist erfindungsgemäß dazu ausgelegt, den genutzten Detektor abhängig von der Intensität der vom Detektor detektierten Anteile zu wählen. Das reflektierte Licht kann durch mehrere Strahlteiler oder Umlenkspiegel in den gewünschten Detektor geleitet werden und der geeignete Detektor kann manuell, automatisierbar oder automatisch angesteuert und ausgelesen werden.

Geeignete Detektortypen umfassen Photodioden, Thermopiles oder pyroelektrische Sensoren..

Photodioden umfassen einen Halbleiter-pn-Übergang, der aufgrund Ladungsträgerdiffusion eine Sperrschicht aufweist. Bei der Beleuchtung dieses Übergangs werden Elektron-Loch-Paare erzeugt, die aufgrund der intern angelegten Spannung getrennt und die jeweils n- und p-leitenden Bereiche diffundieren. Der dabei resultierende Strom ist proportional zur einfallenden optischen Leistung. Umsetzungsmäßig können Photodioden als PN-Photodioden, PIN-Photodioden, Lawinen-Photodioden (APDs) oder Schottky-Dioden realisiert werden. Gegebenenfalls kann zusätzlich ein Verstärker eingesetzt werden, der die Empfindlichkeit des Detektors erhöht. Photodioden besitzen den Vorteil, dass sie je nach Ausführung mit einer kurzen Integrationszeit bereits ein aussagekräftiges Signal liefern. Dadurch ist es möglich den Sensor mit hoher Geschwindigkeit durch den Messbereich zu bewegen, was zu einer kurzen Messdauer und Aufzeichnung des AF-Signals führt.

Thermopile (Thermosäulen)-Sensoren wandeln thermische Energie in elektrische (Seebeck-Effekt) und bestehen aus mehreren Thermoelementen, die so verschaltet sind, dass sich ihre Thermospannungen addieren und somit ein messbares elektrisches Signal abgegriffen werden kann. Diese Sensoren wandeln Temperaturgradienten in elektrische Spannungssignale um, und sind deshalb relativ träge im Vergleich zu anderen Sensoren. Daher sind Sie weniger anfällig gegen kurzzeitige Signalschwankungen, jedoch wird die Messdauer verlängert.

Pyroelektrische Sensoren beruhen auf dem Effekt der Pyroelektrizität und bestehen aus polarisierten Kristallen. Bei Wärmeeinstrahlung entsteht ein Temperaturgradient, der zu einer Ladungstrennung im polarisierten Kristall führt, welche dann detektiert werden kann. Dabei wird nur ein Signal geliefert, wenn eine Änderung der einfallenden Strahlung stattfindet. Dies ist genau dann der Fall, wenn sich der Sensor dem Fokusbereich annähert. Aus dem Vergleich der obigen Detektortypen folgt, dass Photodioden, insbesondere Lawinen-Photodioden, bevorzugt für den Autofokus geeignet sind, da sie eine sehr niedrige Ansprechzeit haben und mit hoher Sensitivität verfügbar, bzw. kleiner NEP sind.

In einer bevorzugten Ausgestaltung der Erfindung wird ein Detektor mit einer NEP von ca. $1{,}4 \text{ fW/Hz}^{1/2}$ verwendet. Dadurch können auch sehr geringe Intensitäten der reflektierten Strahlung und folglich Grenzflächen mit sehr geringen Relexionsgraden detektiert werden. Der Sensitivitätsbereich und die NEP eines beliebigen Detektors können auf folgende Weise bestimmt werden: Um die niedrigste, noch detektierbare Spannung des Detektors zu bestimmen, wird von einem gut zu messenden Signal ausgegangen und kontinuierlich die auf den Detektor fallende Leistung verkleinert. Das Signal des Detektors wird dabei kontinuierlich mit aufgezeichnet. Sobald das Signal nicht mehr vom Rauschhintergrund unterscheidbar ist (z.B. falls es nicht mehr möglich ist, eine Gauß- oder Lorentz-Kurve an das Signal anzufitten), ist dies die minimale Leistung, die der Detektor messen kann. Aus dieser minimalen Leistung kann die NEP über folgende Gleichung bestimmt werden, wenn die Bandbreite des Detektors (BW) bekannt ist:

$$NEP = \frac{P_{\min}}{\sqrt{\text{BW}}}$$

. Um die maximale zu messende Leistung eines Detektors zu messen, wird die auf den Detektor fallende Leistung kontinuierlich vergrößert, bis der Detektor in Sättigung geht. Die Schwelle zur Sättigung ergibt die maximale Leistung, die der Detektor messen kann. Das so bestimmte Minimum und Maximum ist die Unter- bzw. Obergrenze des Sensitivitätsbereichs eines Detektors.

Die verfügbare reflektierte Leistung kann vollständig bzw. beinahe vollständig genutzt werden, wenn das Autofokussystem zumindest eine im Autofokusstrahl angeordnete Linse zum Bündeln der reflektierten Anteile der Autofokusbeleuchtung in den Detektor umfasst.

Ferner wird vorgeschlagen, dass das Autofokussystem zumindest eine im Autofokusstrahlengang angeordnete konfokale Apertur zur Elimination von außerhalb des Grenzflächenbereichs stammenden Strahlungsanteilen umfasst. Solche Strahlungsanteile können insbesondere von Rückreflexen aus der Probe außerhalb des Fokuspunkts bzw. der Fokalebene sowie von Reflexen erster Ordnung aus optischen Elementen, wie Spiegeln oder Linsen, stammen. Durch die Apertur wird lediglich reflektiertes Licht aus der Fokalebene in den Detektor gebündelt.

In bevorzugten Ausgestaltungen der Erfindung ist der Detektor ein einziges Halbleiterelement, also kein CCD-Array oder anderer Kamerachip. Auf diese Weise kann der Detektor eine integrierte Intensität in Abhängigkeit von der Fokusposition relativ zur Grenzfläche detektieren. Die Position maximaler Reflexionsintensität entspricht dann der Lage der Grenzfläche.

Die Detektion kann ohne oder mit Lock-in-Verstärker durchgeführt werden. Der Lock-in-Verstärker kann für die Kombination von Materialien mit in die Signaldetektion integriert werden, die aufgrund extrem kleiner Brechzahldifferenzen bzw. extrem geringer Reflexivitäten zu sehr verrauschten Signalen führen.

Die oben genannten verschiedenen Mittel zum In-Übereinstimmung-Bringen der Intensität mit dem Sensitivitätsbereich können natürlich auch kombiniert werden. So kann beispielsweise eine Strahlungsquelle mit verstellbarer Leistung mit austauschbaren Filtern kombiniert werden, Filter in verschiedenen Positionen können kombiniert werden und austauschbare Detektoren können mit austauschbaren Filtern oder einstellbaren Leistungen der Strahlungsquelle kombiniert werden.

In einer bevorzugten Ausgestaltung der Erfindung hat das Autofokussystem eine modulare Bauweise mit wählbaren und austauschbaren Modulen mit verschiedenen Filtern und verschiedenen Detektoren.

Ferner umfasst das Autofokussystem er erfindungsgemäßen Vorrichtung ein Mittel zum Einkoppeln der Autofokus-Beleuchtung in einen Strahlengang einer Vorrichtung zur Lichtstrukturierung durch Ein- oder Mehr-Photonen-Prozesse umfasst. Durch die Verwendung eines gemeinsamen Strahlengangs der Bearbeitungsstrahlung einerseits und der Autofokus-Beleuchtung andererseits, kann die Präzision der Bearbeitung bei gleichzeitiger Kosteneinsparung durch die gemeinsame Nutzung optischer Elemente erhöht werden. Die Bearbeitungsstrahlung kann Laser-Strahlung oder klassische Strahlung sein, beispielsweise UV-Licht und/oder Licht aus Leuchtdioden. Als Mittel zum Einkoppeln der Autofokus-Beleuchtung kommen insbesondere Strahlteiler oder dichroitische Spiegel in Betracht, wobei bei letzteren der tansmittierende und reflektierende Wellenlängenbreich an die Wellenlängen der Bearbeitungsstrahlung und der Autofokus-Beleuchtung angepasst sein müssen.

Ein weiterer Aspekt der Erfindung betrifft ein Verfahren zur Lichtstrukturierung durch Ein- oder Mehr-Photonen-Prozesse, umfassend das selektive Belichten einer Struktur innerhalb eines photostrukturierbaren Materials, die Detektion einer Grenzfläche der selektiv belichteten Struktur mittels eines Autofokussystems der oben beschriebenen Art und zumindest einen Nachbearbeitungsschritt, der von der Lage der detektierten Grenzfläche abhängt. Der Nachbearbeitungsschritt kann insbesondere ein weiterer Photostrukturierungsvorgang mittels TPA oder MPA, aber auch mittels klassischer UV-Belichtung sein.

Ein weiterer Aspekt der Erfindung betrifft ein Verfahren zur Lichtstrukturierung durch Ein- oder Mehr-Photonen-Prozesse, umfassend das selektive Belichten einer Struktur, die mittels 3D-Druck hergestellt wurde, beisielsweise innerhalb eines photostrukturierbaren oder thermoplastischen Materials, die Detektion einer Grenzfläche der selektiv belichteten Struktur mittels eines Autofokussystems der oben beschriebenen Art und zumindest einen Nachbearbeitungsschritt, der von der Lage der detektierten Grenzfläche abhängt. Der Nachbearbeitungsschritt kann insbesondere ein weiterer Photostrukturierungsvorgang mittels TPA oder MPA, aber auch mittels klassischer UV-Belichtung sein, um die Oberfläche zu vergüten, beispielsweise durch eine Glättung der Oberfläche.

Weitere Merkmale und Vorteile der Erfindung sind in der folgenden Figurenbeschreibung beschrieben und in den beiliegenden Figuren dargestellt. Die Merkmale der Beschreibung, der Figuren und der Ansprüche sind in speziellen Kombinationen offenbart. Der Fachmann wird diese Merkmale auch einzeln und in weiteren Unterkombinationen betrachten, um die Erfindung, wie sie durch die Ansprüche definiert ist, an seine Bedürfnisse und einen gewünschten Anwendungsbereich anzupassen.

**Es zeigen:**

Figur 1   ein Autofokussystem
Figur 2   ein Autofokussystem
Figur 3   ein Autofokussystem
Figur 4   ein Autofokussystem und
Figur 5   ein Autofokussystem gemäß der Erfindung.

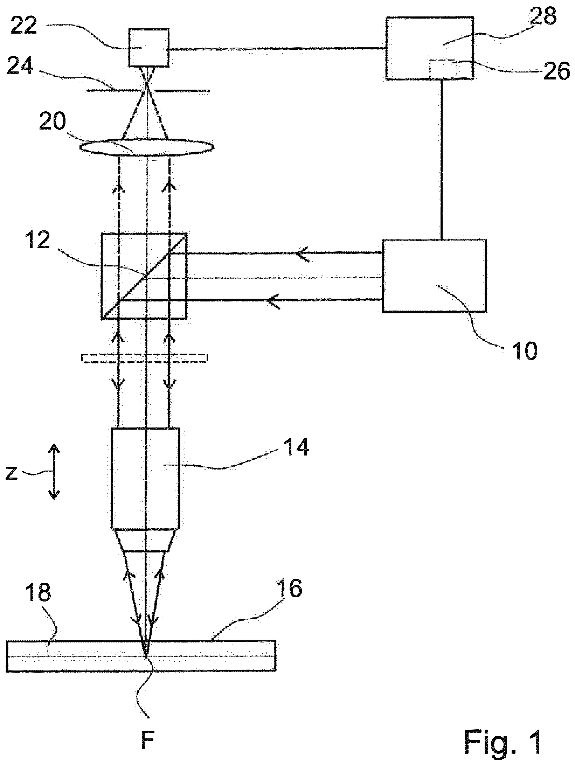

Figur 1 zeigt ein mit der Erfindung verwandtes Autofokussystem zur Detektion von Grenzflächen mit geringer Reflektivität in einer Probe.

Das Autofokussystem ist Teil einer Vorrichtung zur Lichtstrukturierung durch Ein-Photonen-Prozesse oder Mehrphotonen-Prozesse, kann jedoch auch in Mikroskopen oder mechanischen Bearbeitungsgeräten verwendet werden. Das Autofokussystem umfasst eine Strahlungsquelle 10, deren Licht über einen Strahlteiler 12 in die Eintrittspupille einer Fokussieroptik 14 eingestrahlt wird. Die Fokussieroptik 14 wird nicht nur für das Autofokussystem sondern auch für die Laserstrahlbearbeitung verwendet. Der Bearbeitungslaserstrahl kann über einen hier nicht dargestellten, dichroitischen Spiegel in die Fokussieroptik 14 eingekoppelt werden. Statt des dichroitischen Spiegels kann in alternativen ausgestaltungen der Erfindung auch ein Strahlteiler verwendet werden.

Die Fokussieroptik 14 fokussiert das aus der Autofokusstrahlungsquelle 10 stammende Licht in einem Fokuspunkt F in einen Grenzflächenbereich einer Probe 16. Der Grenzflächenbereich ist ein Bereich, in dem eine zu detektierende Grenzfläche 18 zwischen Materialien mit unterschiedlichen Brechungsindizes oder eine Grenzfläche, die aus anderen Gründen reflektiert (beispielsweise durch Metallisierung), vermutet wird.

Durch eine Verstellbarkeit entweder der Fokussieroptik 14 oder eines Trägers der Probe 16 in der axialen Richtung der Fokussieroptik 14 bzw. der Strahlrichtung der eingestrahlten Autofokusbeleuchtung verschiebbaren Träger der Probe 16 kann die Fokalebene relativ zur Probe in diese Richtung verstellt werden. Diese Richtung wird im Folgenden auch als z-Richtung bezeichnet und ist in Figur 1 durch einen Doppelpfeil angedeutet.

Das von der Grenzfläche 18 reflektierte Licht wird teilweise durch den Strahlteiler 12 durchgelassen und von einer Linse 20 in einem Detektor 22 gebündelt. Zwischen der Linse 20 und dem Detektor 22 ist eine konfokale Apertur 24 positioniert, welche Rückreflexe, die aus Bereichen der Probe 16 außerhalb der Fokalebene sowie Reflexe erster Ordnung, die beispielsweise von optischen Elementen resultieren können, unterdrückt und so im Wesentlichen nur denjenigen Anteil des Licht auf den Detektor 22 bündelt, der im Fokuspunkt F reflektiert wurde.

Der Detektor 22 detektiert eine integrierte Intensität dieser reflektierten Anteile der Autofokusbeleuchtung, die, in Abhängigkeit von der z-Position des Fokuspunkts F bzw. der Fokalebene betrachtet, dann ein Maximum hat, wenn die Fokalebene genau mit der Grenzfläche 18 übereinstimmt bzw. diese tangiert. Durch ein Durchscannen der verschiedenen z-Positionen innerhalb des Grenzflächenbereichs und anschließendes Detektieren des Maximums kann daher die Lage der Grenzfläche 18 in z-Richtung sehr genau, insbesondere mit einer Genauigkeit im $\mu$m-Bereich, detektiert werden. Die Auflösung in Z-Richtung hängt dabei von unterschiedlichen Größen ab: Das verwendete Objektiv bzw. die Rayleigh-Länge des fokussierten Lichts spielt eine entscheidende Rolle, wobei mit einem Objektiv mit höherer numerischer Apertur (NA) eine höhere Auflösung erzielt werden kann. Des Weiteren spielt der Fit-Algorithmus (Gauß, Lorentz, etc.) bei der Auswertung des Detektorsignals eine wichtige Rolle. Störende Artefakte, die das eigentliche Signal überlagern, können damit zum größten Teil erkannt und für das Finden der Grenzflächenposition ignoriert werden. Durch eine Minimierung des Streulichts am Detektor kann ein besseres Signal erzielt werden, was das Auffinden der Grenzflächenposition erleichtert. Dies kann zum Beispiel durch eine Lochblende (Pinhole) direkt vor dem Detektor geschehen. Durch die Verwendung einer hochpräzisen Achse (sub-$\mu$m-Bereich), mit der der Z-Bereich durchfahren wird, kann die Auffindungsgenauigkeit der Grenzfläche weiter verbessert werden.

Aufgrund der Bündelung des Lichts durch die Linse unter Verwendung eines punktartigen Detektors 22 anstelle eines Kamerachips wird die verfügbare Intensität der reflektierten Strahlung anders als in kamerabasierten Detektortypen nicht auf eine Vielzahl von Pixeln verteilt, sondern auf einen einzelnen Detektor gebündelt, sodass eine Detektion von Grenzflächen auch mit geringer Reflektivität bis zu $10^{-4}$ möglich wird.

Die Strahlungsquelle 10 wird über eine Treibereinheit 26 von einer Steuerung 28 in ihrer Intensität gesteuert und umfasst einen Schaltkreis oder ein elektronisches Schaltelement, durch welches die von der Strahlungsquelle 10 initiierte Intensität der Autofokusbeleuchtung verstellt werden kann. Dieser Schaltkreis ist in Kombination mit der Treibereinheit 26 daher ein Mittel zum Einstellen einer Strahlungsleistung der Strahlungsquelle 10.

Die Steuerung 28 ist dazu ausgelegt, in einem zumindest teilautomatisierten Prozess mit Hilfe dieses Mittels die Strahlungsleistung so einzustellen, dass die Intensität der vom Detektor 22 detektierten Anteile der Autofokusbeleuchtung in den Sensitivitätsbereich des Detektors 22 fällt. Ist die Grenzfläche 18 stark reflektierend, reicht eine geringe Strahlungsleistung der Strahlungsquelle 10 aus, um vom Detektor 22 ein einerseits nicht verrauschtes und andererseits nicht übersättigtes Sensorsignal zu erhalten. Bei Grenzflächen 18 mit sehr geringer Reflektivität muss dagegen die Lichtintensität der Strahlungsquelle erhöht werden, um zu gewährleisten, dass auch die Intensität der nun kleineren reflektierten Anteile der Autofokusbeleuchtung ausreicht, um ein gutes Signal des Detektors 22 zu erhalten. Abhängig von einer Reflektivität der Grenzfläche 18 wird also von der Steuerung 28 die Leistung der Strahlungsquelle 10 so angepasst, dass die vom Detektor 22 detektierten Anteile der Autofokusbeleuchtung innerhalb eines Sensitivitätsbereichs des Detektors 22 liegen.

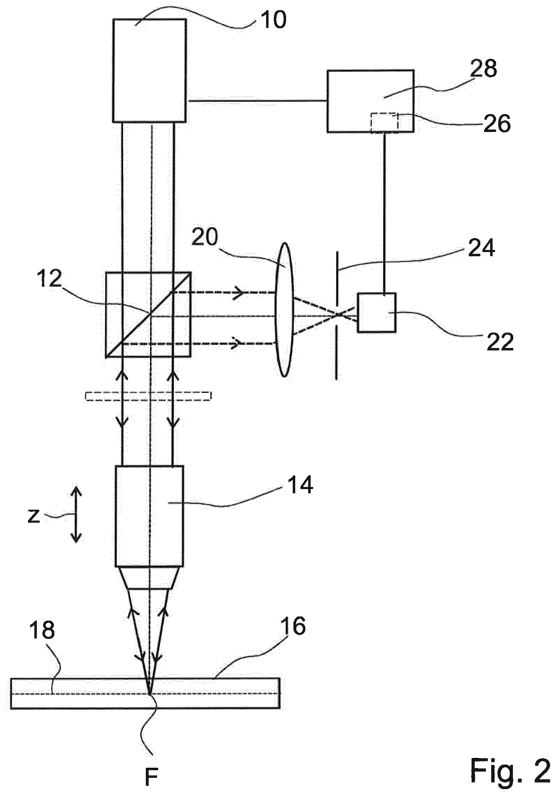

Figur 2 zeigt ein zweite mit der Erfindung verwandte Vorrichtung, in welcher der von der Strahlungsquelle 10 emittierte Strahl vom Strahlteiler 12 durchgelassen wird und der zu detektierende Strahl in den Detektor 22 ausgekoppelt wird.

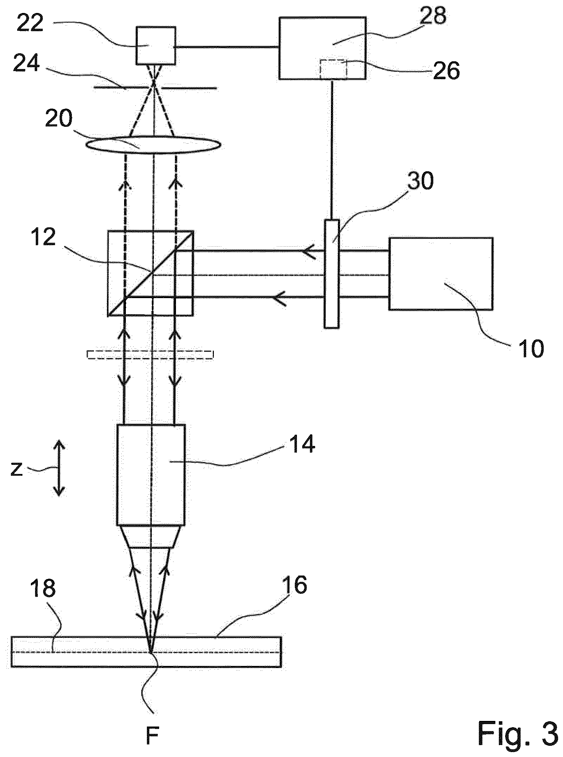

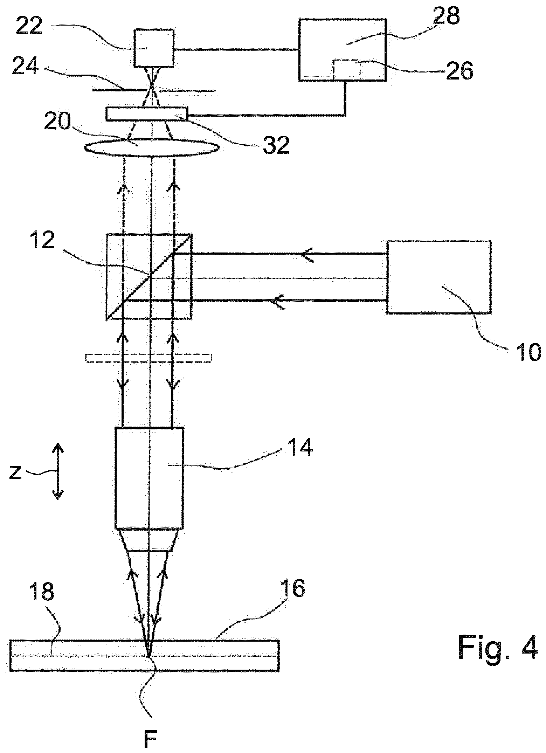

Figuren 3 und 4 zeigen weitere mit der Erfindung verwandte Vorrichtungen, in welchen als alternatives oder ergänzendes Mittel zum Einstellen des in dem Detektor 22 einfallenden Anteils der reflektierten Autofokusbeleuchtung Filter 30, 32 vorgesehen sind.

In der in Figur 3 dargestellten Vorrichtung ist der Filter 30 unmittelbar am Ausgang der Strahlungsquelle 10 angeordnet, sodass er zur Detektion von Grenzflächen 18 hoher Reflektivität die Intensität der eingestrahlten Autofokusbeleuchtung bereits verringert, bevor sie den Strahlteiler 12 erreicht. Der Filter 30 ist Repräsentant eines Sortiments von Filtern, die beispielsweise in einem verstellbaren Filterrad oder einer Schiene mit mehreren nebeneinander angeordneten Filtern oder auch in einer Kassette bereitgestellt werden können, um manuell oder teilautomatisiert in den Strahlengang der Autofokusbeleuchtung eingebracht zu werden.

Figur 4 zeigt eine mit der Erfindung verwandte Vorrichutng, in welcher ein Filter 32 zwischen der Linse 20 und der Apertur 24 des Autofokussystems eingebracht ist.

Der Filter 30, 32 wird in den Beispielen aus Fig. 3 und 4 manuell oder in einem teilautomatisierten Prozess durch die Steuerung 28 so gewählt, dass zur Detektion von Grenzflächen mit höherer Reflektivität ein Filter 30, 32 mit geringerer Transmission eingesetzt wird und zur Detektion von Grenzflächen mit der geringsten Reflektivität überhaupt kein Filter eingesetzt wird.

Insbesondere wird der Filter so gewählt, dass die in den Detektor 22 einfallende Intensität der reflektierten Autofokusbeleuchtung in den Sensitivitätsbereich des Detektors 22 fällt. Der Filter 30, 32 ist daher ein Mittel, welches dazu geeignet ist, diese Intensität in Übereinstimmung mit dem Sensitivitätsbereich des Detektors 22 zu bringen.

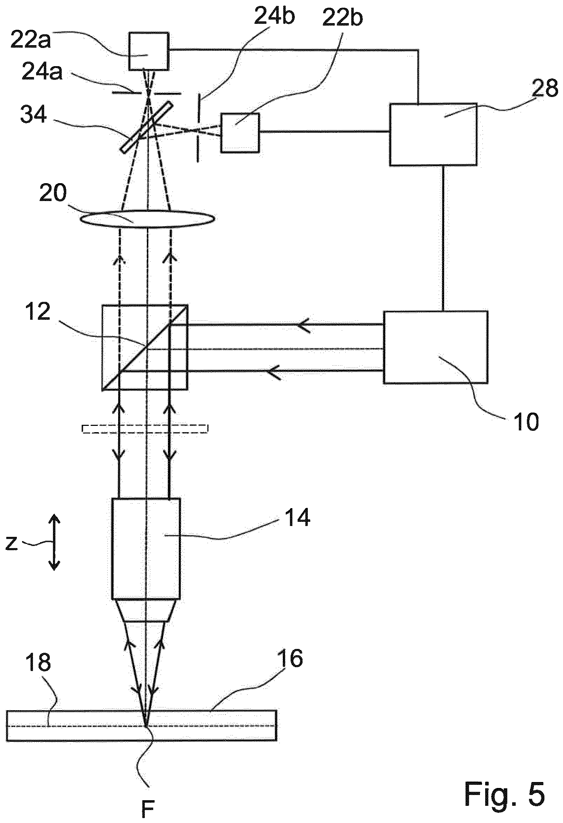

Figur 5 zeigt ein Ausführungsbeispiel der Erfindung mit mehreren Detektoren 22a, 22b, die abhängig von der Reflektivität der zu detektierenden Grenzfläche 18 ausgewählt werden können. Für Grenzflächen 18 mit höherer Reflektivität wird ein Detektor 22a verwendet, der weniger empfindlich ist und andererseits weniger schnell übersättigt, und für Grenzflächen 18 mit geringerer Reflektivität ein Detektor 22b, der hochempfindlich ist, im Fall von Grenzflächen 18 mit hoher Reflektivität aber schnell seine Sättigungswerte erreicht. Die Detektoren 22a, 22b können über einen Spiegel 34 angesteuert werden und so abhängig von einem gewünschten Sensitivitätsbereich bzw. abhängig von der Reflektivität der zu detektierenden Grenzfläche 18 ausgewählt werden. Der Spiegel 34 ist daher in diesem Ausführungsbeispiel ein Mittel, welches dazu geeignet ist, das Autofokussystem derart anzupassen, dass die Intensität der vom Detektor 22a, 22b detektierten Anteile der Autofokusbeleuchtung mit dem Sensitivitätsbereich des Detektors in Übereinstimmung gebracht wird. In einer alternativen Ausgestaltung der Erfindung kann statt des Spiegels 34 ein Beamsplitter eingesetzt werden, der den Strahl in einem festen Verhältnis, beispielsweise 90:10, aufspaltet und an Sensoren mit gleichen oder unterschiedlichen Empfindlichkeitsbereichen leitet. Hier wird daher durch Auswahl des Detektors 22a, 22b der Sensitivitätsbereich geändert und nicht wie in den Vergleichsbeispielen der Figuren 1 bis 4 die Intensität der einfallenden Strahlung an den Detektor 22 angepasst.

Selbstverständlich sind auch Kombinationen der oben genannten Lösungen denkbar.

Der Detektor 22 in Vorrichtungen der Figuren 1 bis 4 und der Detektor 22a im Ausführungsbeispiel der Figur 5 ist ein extrem sensitiver Detektor einer rauschäquivalenten Eingangsleistung (NEP) von $\leq 1,5$ fW/$\sqrt{Hz}$.

## Patentansprüche

1. Vorrichtung zur Lichtstrukturierung durch Ein- oder Mehr-Photonen-Prozesse mit einem Autofokussystem zur Detektion von reflektierenden Grenzflächen (18), wobei das Autofokussystem umfasst:

   a. eine Strahlungsquelle (10) zum Erzeugen einer Autofokus-Beleuchtung,
   b. eine Fokussieroptik (14) zum Fokussieren der Autofokus-Beleuchtung in einen Grenzflächenbereich der Probe (16), in welchem die Grenzfläche (18) detektiert werden soll,
   c. zumindest einen zwischen der Strahlungsquelle (10) und der Fokussieroptik (14) angeordneten Strahlteiler (12) zum Einstrahlen der Autofokus-Beleuchtung in die Fokussieroptik (14) und zum Auskoppeln von reflektierten Anteilen der Autofokus-Beleuchtung in einen Autofokus-Strahlengang, und
   d. zumindest einen Detektor (22, 22a, 22b) zum Detektieren einer Intensität der reflektierten Anteile der Autofokus-Beleuchtung, wobei der zumindest eine Detektor (22, 22a, 22b) eine Noise Equivalent Power (NEP) hat, die in einem Intervall zwischen 1 fW/Hz$^{1/2}$ und 300 pW/Hz$^{1/2}$ liegt, sowie durch zumindest ein erstes Mittel (28, 30, 32, 34), das dazu ausgelegt ist, die Intensität der vom Detektor (22, 22a, 22b) detektierten Anteile der Autofokus-Beleuchtung mit einem Sensitivitätsbereich des Detektors (22, 22a, 22b) in Übereinstimmung zu bringen, wobei der Detektor (22, 22a, 22b) als punktartiger Detektor ausgestaltet ist, der ein einziges Halbleiterelement aufweist und eine integrierte Intensität in Abhängigkeit von der Fokusposition relativ zur Grenzfläche detektiert und wobei die Autofokus-Vorrichtung ferner zumindest eine zwischen dem Strahlteiler (12) und dem Detektor (22, 22a, 22b) in dem Autofokus-Strahlengang angeordnete Linse (20) zum Bündeln der reflektierten Anteile der Autofokus-Beleuchtung in den Detektor (22, 22a, 22b) umfasst, so dass die verfügbare Intensität der reflektierten Strahlung auf den einzelnen Detektor (22, 22a, 22b) gebündelt wird,

   ferner umfassend ein zweites Mittel zum Einkoppeln der Autofokus-Beleuchtung in einen Strahlengang einer Bearbeitungsstrahlung der Vorrichtung zur Lichtstrukturierung durch Ein- oder Mehr-Photonen-Prozesse, **gekennzeichnet durch** mehrere Detektoren (22a, 22b) mit unterschiedlichen Sensitivitätsbereichen, ferner umfassend ein drittes Mittel (28, 34), das dazu ausgelegt ist, den genutzten Detektor (22a, 22b) abhängig von der Intensität der vom Detektor (22a, 22b) detektierten Anteile zu wählen.

2. Vorrichtung nach Anspruch 1,
**dadurch gekennzeichnet, dass** das erste Mittel ein in den Lichtweg der Autofokus-Beleuchtung einbringbarer Filter (30, 32) ist.

3. Vorrichtung nach einem der Ansprüche 1 und 2,
**dadurch gekennzeichnet, dass** das erste Mittel (30, 32) zum Einstellen einer Strahlungsleistung der Strahlungsquelle (10) ausgelegt ist.

4. Vorrichtung nach einem der Ansprüche 1 - 3,
**gekennzeichnet durch** eine Treibereinheit zum automatisierten Betreiben des Mittels (30, 32, 34).

5. Vorrichtung nach Anspruch 4,
**gekennzeichnet durch** eine Steuerung (28), die dazu ausgelegt ist, das erste Mittel (30, 32, 24) in einem zumindest teilautomatisierten Prozess so einzustellen, dass die Intensität der vom Detektor (22, 22a, 22b) detektierten Anteile der Autofokus-Beleuchtung in den Sensitivitätsbereich des Detektors (22, 22a, 22b) fällt.

6. Vorrichtung nach Anspruch 5,
**gekennzeichnet durch** einen Regelkreis, in welchem die Steuerung die Intensität der vom Detektor (22, 22a, 22b) detektierten Anteile der Autofokus-Beleuchtung als Regelgröße nutzt.

7. Vorrichtung nach einem der vorhergehenden Ansprüche,
**dadurch gekennzeichnet, dass** der zumindest eine Detektor (22, 22a, 22b) eine Photodiode ist.

8. Vorrichtung nach einem der vorhergehenden Ansprüche,
**dadurch gekennzeichnet, dass** der zumindest eine Detektor (22, 22a, 22b) ein Thermopile ist.

9. Vorrichtung nach einem der vorhergehenden Ansprüche,
**dadurch gekennzeichnet, dass** zumindest einer der Detektoren (22, 22a, 22b) ein pyroelektrischer Sensor ist.

10. Vorrichtung nach einem der vorhergehenden Ansprüche,
**dadurch gekennzeichnet, dass** der zumindest eine Detektor (22, 22a, 22b) eine rauschäquivalente Eingangsleistung (Noise Equivalent Power, NEP) von weniger als 2 $fW/Hz^{1/2}$ hat.

11. Vorrichtung nach einem der vorhergehenden Ansprüche, **gekennzeichnet durch** zumindest eine im Autofokus-Strahlengang angeordnete konfokale Apertur (24) zur Elimination von außerhalb des Grenzflächenbereichs stammenden Strahlungsanteilen.

12. Vorrichtung nach Anspruch 1,
**dadurch gekennzeichnet, dass** das zweite Mittel als dichroitischer Spiegel ausgebildet ist.

13. Vorrichtung nach einem der vorhergehenden Ansprüche, **gekennzeichnet durch** einen Lock-In-Verstärker zur Verstärkung eines von der reflektierenden Grenzfläche (18) erzeugten Signalanteils des Detektors (22, 22a, 22b).

14. Vorrichtung nach einem der vorhergehenden Ansprüche, **dadurch gekennzeichnet, dass** der zumindest eine Detektor (22, 22a, 22b) eine Noise Equivalent Power (NEP) hat, die in einem Intervall zwischen 1 $pW/Hz^{1/2}$ und 300 $pW/Hz^{1/2}$ liegt.

15. Vorrichtung nach einem der Ansprüche 1 - 14,
**dadurch gekennzeichnet, dass** der zumindest eine Detektor (22, 22a, 22b) eine Noise Equivalent Power (NEP) hat, die in einem Intervall zwischen 500 $fW/Hz^{1/2}$ und 300 $pW/Hz^{1/2}$ liegt.

16. Vorrichtung nach einem der Ansprüche 1 - 14,
**dadurch gekennzeichnet, dass** der zumindest eine Detektor (22, 22a, 22b) eine Noise Equivalent Power (NEP) hat, die in einem Intervall zwischen 1 $fW/Hz^{1/2}$ und 100 $fW/Hz^{1/2}$ liegt.

17. Verwendung einer Vorrichtung nach Anspruch 1 in einem Verfahren zur Lichtstrukturierung eines photopolymerisierbaren Materials, wobei das Autofokussystem zur Detektion einer Grenzfläche zwischen einem bereits polymerisierten Bereich des Materials und einem nicht polymerisierten Bereich des Materials genutzt wird.

**Claims**

1. Device for light structuring by single or multi-photon processes having an autofocus system for detecting reflective interfaces (18), the autofocus system comprising:

   a. a radiation source (10) for generating autofocus illumination,
   b. focusing optics (14) for focusing the autofocus illumination into an interface region of the sample (16) in which the interface (18) is to be detected,

c. at least one beam splitter (12) arranged between the radiation source (10) and the focusing optics (14) for irradiating the autofocus illumination into the focusing optics (14) and for coupling out reflected portions of the autofocus illumination into an autofocus beam path, and

d. at least one detector (22, 22a, 22b) for detecting an intensity of the reflected portions of the autofocus illumination,

said at least one detector (22, 22a, 22b) having a Noise Equivalent Power (NEP) lying in an interval between 1 fW/Hz$^{1/2}$ and 300 pW/Hz$^{1/2}$ and by at least one first means (28, 30, 32, 34) arranged to match the intensity of the portions of the autofocus illumination detected by the detector (22, 22a, 22b) with a sensitivity range of the detector (22, 22a, 22b), wherein the detector (22, 22a, 22b) is configured as a point-like detector which comprises a single semiconductor element and detects an integrated intensity as a function of the focus position relative to the interface, and wherein the autofocus device further comprises at least one lens (20) arranged between the beam splitter (12) and the detector (22, 22a, 22b) in the autofocus beam path for focusing the reflected portions of the autofocus illumination into the detector (22, 22a, 22b) such that the available intensity of the reflected radiation is focused onto the single detector (22, 22a, 22b),

further comprising a second means for coupling the autofocus illumination into a beam path of a processing radiation of the device for light structuring by single or multi-photon processes, **characterised by** a plurality of detectors (22a, 22b) having different sensitivity ranges, further comprising third means (28, 34) adapted to select the detector (22a, 22b) used depending on the intensity of the components detected by the detector (22a, 22b).

2. Device according to claim 1, **characterised in that** the first means is a filter (30, 32) insertable into the beam path of the autofocus illumination.

3. Device according to one of claims 1 and 2, **characterised in that** the first means (30, 32) is adapted to adjust a radiation power of the radiation source (10).

4. Device according to any of claims 1 - 3, **characterised by** a driver unit for automated operation of the means (30, 32, 34).

5. Device according to claim 4, **characterised by** a controller (28) adapted to adjust the first means (30, 32, 24) in an at least partially automated process such that the intensity of the portions of the autofocus illumination detected by the detector (22, 22a, 22b) falls within the sensitivity range of the detector (22, 22a, 22b).

6. Device according to claim 5, **characterised by** a control loop in which the controller uses the intensity of the portions of the autofocus illumination detected by the detector (22, 22a, 22b) as a controlled variable.

7. Device according to any of the preceding claims, **characterised in that** the at least one detector (22, 22a, 22b) is a photodiode.

8. Device according to any of the preceding claims, **characterised in that** the at least one detector (22, 22a, 22b) is a thermopile.

9. Device according to any of the preceding claims, **characterised in that** at least one of the detectors (22, 22a, 22b) is a pyroelectric sensor.

10. Device according to any of the preceding claims, **characterised in that** the at least one detector (22, 22a, 22b) has a noise equivalent input power (Noise Equivalent Power, NEP) of less than 2 fW/Hz$^{1/2}$.

11. Device according to any of the preceding claims, **characterised by** at least one confocal aperture (24) arranged in the autofocus beam path for eliminating radiation components originating outside the interface region.

12. Device according to claim 1, **characterised in that** the second means is designed as a dichroic mirror.

13. Device according to any of the preceding claims, **characterised by** a lock-in amplifier for amplifying a signal portion of the detector (22a, 22b) generated by the reflective interface (18).

14. Device according to any one of the preceding claims, **characterised in that** the at least one detector (22, 22a, 22b) has a Noise Equivalent Power (NEP) that is in an interval between 1 pW/Hz$^{1/2}$ and 300 pW/Hz$^{1/2}$.

15. Device according to one of the claims 1-14, **characterised in that** the at least one detector (22, 22a, 22b) has a Noise Equivalent Power (NEP) that is in an interval between 500 fW/Hz$^{1/2}$ and 300 pW/Hz$^{1/2}$.

**16.** Device according to one of the claims 1-14, **characterised in that** the at least one detector (22, 22a, 22b) has a Noise Equivalent Power (NEP) that is in an interval between 1 fW/Hz$^{1/2}$ and 100 fW/Hz$^{1/2}$.

**17.** Use of a device according to claim 1 in a method of light patterning a photopolymerisable material, wherein the autofocus system is used to detect an interface between an already polymerised region of the material and an unpolymerised region of the material.

## Revendications

**1.** Dispositif de structuration de lumière par le biais de processus à un ou plusieurs photons avec un système à mise au point automatique pour la détection de limites réfléchissantes (18), dans lequel le système à mise au point automatique comprend :

a. une source de rayonnement (10) destinée à générer un éclairage à mise au point automatique,

b. un optique de focalisation (14) destiné à focaliser l'éclairage à mise au point automatique dans une zone de limite de l'échantillon (16) où la limite (18) doit être détectée,

c. au moins un diviseur de faisceau (12) disposé entre la source de rayonnement (10) et l'optique de focalisation (14) qui est destiné à rayonner l'éclairage à mise au point automatique dans l'optique de focalisation (14) et à coupler des composantes réfléchies de l'éclairage à mise au point automatique dans un trajet de faisceau à mise au point automatique, et

d. au moins un détecteur (22, 22a, 22b) destiné à détecter une intensité des composantes réfléchies de l'éclairage à mise au point automatique, dans lequel l'au moins un détecteur (22, 22a, 22b) a une puissance équivalente de bruit (*Noise Equivalent Power,* NEP) qui se situe dans un intervalle entre 1 fW/Hz$^{1/2}$ et 300 pW/Hz$^{1/2}$, ainsi que par au moins un premier moyen (28, 30, 32, 34) qui est conçu de telle sorte que l'intensité des composantes de l'éclairage à mise au point automatique détectées par le détecteur (22, 22a, 22b) soit conforme à une plage de sensibilité du détecteur (22, 22a, 22b), dans lequel le détecteur (22, 22a, 22b) est réalisé sous la forme d'un détecteur de type point qui présente un seul élément à semiconducteur et détecte une intensité intégrée en fonction de la position de focalisation par rapport à la limite et dans lequel le dispositif à mise au point automatique comprend en outre au moins une lentille (20) disposée entre le diviseur de faisceau (12) et le détecteur (22, 22a, 22b) dans le trajet de faisceau à mise au point automatique afin de concentrer les composantes réfléchies de l'éclairage à mise au point automatique dans le détecteur (22, 22a, 22b) de manière à concentrer l'intensité disponible du rayonnement réfléchi sur l'unique détecteur (22, 22a, 22b), comprenant en outre un deuxième moyen destiné à coupler l'éclairage à mise au point automatique dans un trajet de faisceau d'un rayonnement de traitement du dispositif de structuration de lumière par le biais de processus à un ou plusieurs photons, **caractérisé par** plusieurs détecteurs (22a, 22b) avec différentes plages de sensibilité, comprenant en outre un troisième moyen (28, 34) qui est conçu pour sélectionner le détecteur (22a, 22b) utilisé en fonction de l'intensité des composantes détectées par le détecteur (22a, 22b).

**2.** Dispositif selon la revendication 1, **caractérisé en ce que** le premier moyen est un filtre (30, 32) qui peut être introduit dans le trajet lumineux de l'éclairage à mise au point automatique.

**3.** Dispositif selon une des revendications 1 et 2, **caractérisé en ce que** le premier moyen (30, 32) est conçu pour régler une puissance de rayonnement de la source de rayonnement (10) .

**4.** Dispositif selon une des revendications 1 à 3, **caractérisé par** une unité d'exploitation destinée à exploiter le moyen (30, 32, 34) de manière automatique.

**5.** Dispositif selon la revendication 4, **caractérisé par** une commande (28) qui est conçue pour régler le premier moyen (30, 32, 24) dans un processus au moins partiellement automatisé de telle sorte que l'intensité des composantes de l'éclairage à mise au point automatique détectées par le détecteur (22, 22a, 22b) soit comprise dans la plage de sensibilité du détecteur (22, 22a, 22b).

**6.** Dispositif selon la revendication 5, **caractérisé par** un circuit de régulation dans lequel la commande utilise l'intensité des composantes de l'éclairage à mise au point automatique détectées par le détecteur (22, 22a, 22b) comme grandeur de régulation.

**7.** Dispositif selon une des revendications précédentes, **caractérisé en ce que** l'au moins un détecteur (22, 22a, 22b) est une photodiode.

**8.** Dispositif selon une des revendications précédentes,

**caractérisé en ce que** l'au moins un détecteur (22, 22a, 22b) est une thermopile.

9. Dispositif selon une des revendications précédentes,
   **caractérisé en ce que** l'au moins un détecteur (22, 22a, 22b) est un capteur pyroélectrique.

10. Dispositif selon une des revendications précédentes,
    **caractérisé en ce que** l'au moins un détecteur (22, 22a, 22b) a une puissance d'entrée équivalente de bruit (*Noise Equivalent Power,* NEP) inférieure à 2 fW/Hz$^{1/2}$.

11. Dispositif selon une des revendications précédentes,
    **caractérisé par** au moins une ouverture confocale (24) disposée dans le trajet de faisceau à mise au point automatique pour éliminer des composantes de rayonnement provenant de l'extérieur de la zone de limite.

12. Dispositif selon la revendication 1,
    **caractérisé en ce que** le deuxième moyen est réalisé sous la forme d'un miroir dichroïque.

13. Dispositif selon une des revendications précédentes,
    **caractérisé par** un amplificateur à verrouillage pour amplifier une composante de signal du détecteur (22a, 22b) générée par la limite (18) réfléchissante.

14. Dispositif selon une des revendications précédentes,
    **caractérisé en ce que** l'au moins un détecteur (22, 22a, 22b) a une puissance équivalente de bruit (*Noise Equivalent Power,* NEP) qui se situe dans un intervalle entre 1 pW/Hz$^{1/2}$ et 300 pW/Hz$^{1/2}$.

15. Dispositif selon une des revendications 1 à 14,
    **caractérisé en ce que** l'au moins un détecteur (22, 22a, 22b) a une puissance équivalente de bruit (*Noise Equivalent Power,* NEP) qui se situe dans un intervalle entre 500 fW/Hz$^{1/2}$ et 300 pW/Hz$^{1/2}$.

16. Dispositif selon une des revendications 1 à 14,
    **caractérisé en ce que** l'au moins un détecteur (22, 22a, 22b) a une puissance équivalente de bruit (*Noise Equivalent Power,* NEP) qui se situe dans un intervalle entre 1 fW/Hz$^{1/2}$ et 100 fW/Hz$^{1/2}$.

17. Utilisation d'un dispositif selon la revendication 1 destiné à une structuration de lumière d'un matériau photopolymérisable, dans lequel le système à mise au point automatique est utilisé pour détecter une limite entre une zone du matériau déjà polymérisée et une zone du matériau non polymérisée.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5604344 A
- US 6545765 B
- WO 2009065590 A1
- DE 10319182 A1
- US 7345814 B2
- WO 2010067256 A1
- US 4814829 A
- US 2011176793 A1
- WO 9722900 A1
- US 5486701 A
- WO 2014108546 A2